# FASCICULE DE BREVET EUROPEEN

(11) **EP 3 820 602 B1**
(45) Date de publication et mention de la délivrance du brevet: **23.02.2022**
(21) Numéro de dépôt: 19749776.1
(22) Date de dépôt: 28.06.2019
(51) Int. Cl.: B01J 8/04

(54) **DISPOSITIF PERMETTANT DE LIMITER OU SUPPRIMER LA MIGRATION DE PARTICULES ENTRE DEUX COUCHES**
VORRICHTUNG ZUM BEGRENZEN ODER ELIMINIEREN DER MIGRATION VON PARTIKELN ZWISCHEN ZWEI SCHICHTEN
DEVICE FOR LIMITING OR ELIMINATING THE MIGRATION OF PARTICLES BETWEEN TWO LAYERS

(30) Priorité: 11.07.2018 FR 1856371
(43) Date de publication de la demande: 19.05.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: MONEREAU, Christian, 34000 Montpellier (FR); SUN, Lian-Ming, 75007 PARIS (FR); FRAIOLI, Bernard, 91210 DRAVEIL (FR); MORINEAU, Benjamin, 75007 PARIS (FR); GUERET, Vincent, 75012 PARIS (FR)
(74) Mandataire: Air Liquide
(86) Numéro de dépôt international: PCT/FR2019/051611
(87) Numéro de publication internationale: WO 2020/012087

(56) Documents cités:
- WO-A1-2009/103395
- FR-A1- 2 676 373
- US-A1- 2012 237 415

## Description

La présente invention est relative à un dispositif destiné à être intercalé entre une couche inférieure et une couche supérieure de particules disposées dans une enveloppe cylindrique, de manière à limiter ou supprimer la migration des particules entre les couches.

Ce dispositif situé à l'interface des deux milieux particulaires est poreux vis-à-vis des fluides éventuellement en circulation dans l'enveloppe. Il est conçu pour rester en contact à la fois avec les couches inférieure et supérieure même en cas de tassement de ces dernières. Il peut être utilisé dans un réacteur, un adsorbeur ou plus généralement dans toute capacité de stockage dans laquelle on veut séparer parfaitement différentes couches de particules tout en laissant la possibilité à un fluide de circuler librement. La section de ladite enveloppe peut être quelconque mais sera généralement circulaire, l'enveloppe se présentant alors sous la forme d'un cylindre d'axe vertical.

Il est fréquent dans de nombreux procédés industriels de vouloir superposer différentes couches de particules et éviter tout mélange entre ces couches. Le procédé de production d'hydrogène pur au moyen d'un PSA (Pressure Swing Adsorption = adsorbeur à variation de pression) en est un exemple typique. Les adsorbeurs utilisés dans un tel procédé se présentent généralement sous la forme de cylindres à axe vertical. De bas en haut, on pourra ainsi trouver dans l'enveloppe une entrée/sortie pour les fluides en circulation (gaz à traiter, résiduaire...), un supportage de type caillebotis par exemple, différentes couches de particules inertes facilitant la bonne répartition du gaz à travers toute la section de l'adsorbeur (billes de céramiques ou tout autre produit de formes diverses développé pour cet usage), puis, disposées les unes sur les autres, les différentes couches d'adsorbants choisis pour optimiser la séparation entre l'hydrogène et les impuretés. Si le gaz à traiter provient d'un réformage à la vapeur, on pourra alors trouver successivement de l'alumine activée, du charbon actif et plusieurs types de zéolite (5A, 13X, LiLSX...) pour arrêter successivement l'eau, les impuretés secondaires, le CO2, le méthane, le monoxyde de carbone et l'azote. Au-dessus de la dernière couche d'adsorbant, on pourra à nouveau trouver des billes inertes destinées à réduire le volume mort du fond supérieur de l'adsorbeur, à faciliter la bonne distribution du gaz, à éviter les mouvements des particules d'adsorbant... Les différentes couches que l'on va trouver ont des caractéristiques plus ou moins différentes. Elles peuvent ainsi se différencier
- par la forme : billes, selles, bâtonnets, pastilles, plaques, granulés, concassés, barillets (pastilles perforées) ...
- par les dimensions : de quelques centimètres pour les éléments de supportage à moins d'un millimètre pour certaines couches de zéolite par exemple...
- par la densité : de moins de 500 grammes par litre pour du charbon actif à plusieurs kilogrammes dans le cas de billes en acier utilisées comme éléments inertes...
- par l'état de surface allant de paroi lisse (céramique, certains adsorbants...) à paroi rugueuse (charbon actif...), voire anguleuse ou présentant des aspérités.

On notera que l'on peut vouloir séparer deux couches successives de produits identiques. Certains adsorbants (charbon actif, zéolites) peuvent par exemple être régénérés chez le fournisseur après une première utilisation au cours de laquelle ils ont été contaminés, généralement par de l'humidité. Après traitement, ils récupèrent alors la quasi-totalité de leur capacité initiale mais seront généralement utilisés par sécurité comme couche de garde sous un même adsorbant neuf ou non pollué au lieu d'être mélangés à ce dernier.

On conçoit que dans le cas du PSA H2 pris comme exemple, tout mélange de couches aurait des effets négatifs sur le procédé. Cela pourrait conduire à des bouchages partiels locaux conduisant à des défauts de répartition des fluides en circulation, à des couches d'épaisseur non uniforme, à la présence d'adsorbant dans des zones où il n'a pas lieu d'être (risque d'empoisonnement s'il se trouve plus près de l'alimentation que prévu et est mis en présence d' impuretés incompatibles avec son bon fonctionnement, risque d'inefficacité s'il se retrouve au contraire dans une zone plus proche de la sortie que prévu en présence dans ce cas d'impuretés pour lesquelles il ne présente que peu d'affinité).

Autant que faire se peut, l'Homme de l'Art utilisera une succession de matériaux particulaires qui ne peuvent se mélanger par nature. Les billes assurant le supportage des adsorbants ou des catalyseurs et la distribution des fluides en sont le meilleur exemple. Les fournisseurs ont développé des gammes de produits dont l'utilisation en couches successives évite toute possibilité de mélange y compris à la paroi.

Il convient de noter dès à présent deux points importants quand on parle de couches de matériaux particulaires :
- L'arrangement entre les particules d'une même couche dépend de la manière dont s'est fait le remplissage. Le taux de vide du lit ainsi formé est variable et pour un lit de billes de taille uniforme va pouvoir aller pratiquement par exemple de 0.34 à 0.39 alors qu'en théorie l'intervalle potentiel est encore plus important entre les empilements extrêmes géométriquement possibles. Dans le cas de populations de billes présentant une certaine dispersion sur le diamètre, ce taux de vide peut être plus faible. De même une dispersion sur le facteur de sphéricité peut conduire à des lits plus ou moins tassé. Cela se traduit directement sur la densité du lit et on parle de remplissage dense ou de remplissage lâche ou desserré dans le cas inverse. Ces effets sont bien connus et permettent en particulier de déterminer pour une population donnée la section libre à travers laquelle des particules de taille moindre peuvent se faufiler et par là descendre progressivement dans le lit. Cette approche est plus délicate dans le cas de particules de formes variées et des essais peuvent être nécessaires pour déterminer taux de vide et limite d'interpénétration.
- La paroi provoque une discontinuité dans l'arrangement des particules d'un lit. La surface de la paroi étant généralement plane, le taux de vide local est différent de celui au sein du lit. Ce taux de vide est très généralement plus important à cet endroit et se répercute sur une distance de plusieurs particules. Comme précédemment, ces effets ont été étudiés et sont connus de l'Homme de l'Art.

Ainsi, pour supporter un lit d'adsorbant constitué de billes quasiment sphériques (coefficient de sphéricité supérieur à 0.95), de 3.0 mm de diamètre moyen avec moins de 1% de billes de diamètre moindre que 2.7 mm, on pourra mettre en place au-dessus de la grille support successivement 10 cm de billes de céramique de 20mm de diamètre, puis 10 cm de billes de 10mm, enfin 10 cm de billes de 5mm. On assurera ainsi une bonne distribution des fluides en circulation et un supportage sans risque d'interpénétration, même à la paroi.

Dans les applications industrielles, on ne trouve malheureusement pas que ce cas d'école très favorable et il est souvent nécessaire de prévoir un système pour empêcher le mélange de deux populations de particules déposées l'une sur l'autre. La nécessité d'installer un tel système peut être lié aux caractéristiques physiques respectives des deux couches en contact et/ou à la mise en œuvre des matériaux.

Parmi les caractéristiques physiques, on retrouve les dimensions et les densités respectives des particules des deux couches. Il peut être nécessaire par exemple d'utiliser une première couche d'adsorbant de dimension relativement importante pour limiter les pertes de charge suivie par une couche mince de petite dimension dans la zone frontale pour améliorer les performances du procédé. Au-delà d'un facteur 2 à 2.5 sur les dimensions, il existe un risque pour que les petites billes descendent dans la couche inférieure, en particulier dans le voisinage de la paroi. Un autre cas présentant des risques de mélange correspond à celui où la couche supérieure est constituée de particules de densité plus élevée que celles de la couche inférieure. Du fait de leur poids supérieur, les particules du haut peuvent localement écarter les particules du lit inférieur et descendre progressivement dans cette couche profitant de la mobilité relative des matériaux. Il existe également des évènements pouvant conduire à un mélange de couches apparemment stables. Il peut s'agir de chocs ou de vibrations occasionnés lors d'un transport ou par la proximité de machines. Les fluides en circulation à travers les différents lits peuvent également provoquer des mélanges que ce soit par leur vitesse élevée ou par des changements de régime. Il peut s'agir d'événements survenant en fonctionnement normal (à chaque ouverture de vannes par exemple) ou de façon accidentelle (ouverture intempestive d'une soupape...).

On notera qu'il est possible dans un certain nombre de cas de rajouter entre deux couches successives déterminées comme optimales vis-à-vis du procédé, une couche intermédiaire dont le rôle sera d'empêchertoute migration de particules. Cette couche pourra être inerte vis-à-vis du procédé ou seulement non optimale. Par exemple dans un empilage qui comprendrait une couche d'alumine activée de 2 mm de diamètre normalement surmontée par une couche de zéolite de 0.6 mm de diamètre, on intercale pour éviter les risques de migration, une couche de zéolite de 1.2 mm de diamètre de quelques centimètres pour faire tampon. Outre l'effet légèrement défavorable lié à une cinétique plus lente, cela complique le remplissage en rajoutant un nouveau matériau dont on doit soigner la mise en place vue la hauteur minimale que l'on souhaite installer.

Partant de là, un problème qui se pose est de fournir un moyen amélioré permettant de limiter ou de supprimer la migration de particules entre au moins deux couches de matériaux particulaires différents. FR-A-2 676 373 décrit une couronne destinée à être mise en œuvre dans un réacteur avec lit catalytique.

Une solution de la présente invention est un dispositif destiné à être intercalé entre une couche inférieure et une couche supérieure de particules disposées dans une enveloppe cylindrique, de manière à limiter ou supprimer la migration des particules entre les couches, ledit dispositif comprenant :
i) un disque d'étanchéité constitué de toile ou de grillage présentant :
   - un diamètre sensiblement égal au diamètre interne de l'enveloppe cylindrique, et
   - des mailles de diamètre équivalent inférieur au diamètre équivalent des particules, et
ii) une couronne de toile présentant :
   - des mailles de diamètre équivalent inférieur au diamètre équivalent des particules,
   - une longueur égale au périmètre interne de la base de l'enveloppe cylindrique,
   - une partie supérieure présentant une extrémité supérieure destinée à être fixée sur toute sa longueur à la paroi interne de l'enveloppe cylindrique, et
   - un partie inférieure destinée à être posée sur la couche inférieure de particules ou sur le disque d'étanchéité,
      avec le disque d'étanchéité et la partie inférieure de la couronne de toile étant superposés et le recouvrement du disque et de la couronne de toile étant inférieure à 150 millimètres, de préférence inférieur à 100 millimètres.

Le « diamètre équivalent » d'une particule est celui de la sphère ayant la même surface spécifique, la surface spécifique étant la surface rapportée au volume de la particule considérée.

Dire que la maille de la toile est inférieure au diamètre équivalent des particules signifie en fait inférieur au plus petit des diamètres équivalents des particules des couches inférieures et supérieure. Dans le cas de dispersion des tailles de particules, on peut même souhaiter avoir une maille non plus inférieure au diamètre équivalent mais inférieure aux particules les plus petites.

On donne ici au terme « toile » un sens très général définissant un matériau souple constitué de fils et présentant des passages libres permettant la circulation d'un fluide, plus particulièrement d'un gaz. La toile sera de préférence formée à partir d'un tissu. Ici on entend de préférence par « tissu » un élément obtenu par entrelacement de fils et présentant des ouvertures régulières. La toile peut être tissée et obtenue par entrelacement de fils tendus parallèles (fils de chaîne) et de fils disposés perpendiculairement à ceux-ci (fils de trame) par un outillage adapté (navette, pince, projectile...). Il existe un grand nombre de possibilité de tissage suivant les modes d'entrecroisement des fils et les caractéristiques des fils de chaîne et de trame (maille carrée unie, carrée croisée, croisée, bridée, chevronnée...).

Les toiles couvrent un domaine assez large avec des fils dont le diamètre peut aller de l'ordre du millimètre à quelques dizaines de microns, la majorité étant comprise entre O.5 mm et 40 microns. L'ouverture (vide) est généralement comprise entre plusieurs millimètres et une centaine de microns. Le taux de vide va quant à lui de 20 à 80%, plus fréquemment de 30 à 70%.

Une toile souple peut avoir tendance à gondoler ou à se replier à ses extrémités. On peut être amené à rajouter, une fois qu'elle est en place, des raidisseurs pour éviter ces inconvénients. Il pourra s'agir par exemple de tiges la maintenant en position plane. Ces dispositifs éventuellement présents ne modifient en rien le principe de l'invention.

Il peut être judicieux d'utiliser pour le disque un matériau plus rigide que l'on appellera ici grillage sans préjuger de son mode de fabrication ou de ses caractéristiques mécaniques.

Généralement ce disque sera alors formé de plusieurs secteurs préalablement découpés afin d'être introduit plus facilement dans l'enveloppe. Ces secteurs, par exemple deux demi sections, pourront être reliés entre eux (cousus par un fil métallique par exemple) afin d'offrir le niveau d'étanchéité requis une fois en place dans l'enveloppe.

Par "disque de diamètre sensiblement égal au diamètre de l'enveloppe ", on veut signifier que l'on doit tenir compte des tolérances de fabrication de la virole et du disque et de la mise en place aisée de ce dernier dans l'enveloppe. Ainsi, le diamètre du disque sera par exemple de + ou - 10mm par rapport au diamètre interne de l'enveloppe. Dans le cas d'un disque relativement rigide (de grillage selon notre appellation), on fera en sorte que son diamètre soit légèrement inférieur à celui de la virole pour faciliter une mise en place correcte. On visera alors plutôt +0, -20 mm.

Dans le dispositif selon l'invention, le matériau de la couronne sera quant à lui de la toile souple, le matériau constitutif étant choisi parmi les métaux ou les polymères.

A titre d'exemple la toile utilisée dans le cadre de l'invention peut être un tissu fait de fils d'acier inoxydable entrecroisés de 0.2 mm de diamètre avec des ouvertures de 0.45mm par 0.45mm.

Par ses caractéristiques le dispositif selon l'invention pourra être considéré comme un système flottant. En effet, par « système flottant » on entend un dispositif qui reste au contact des couches inférieure et supérieure même en cas de tassement des lits (par « lit » on entend « couche »)), en particulier du lit inférieur. Ce tassement au cours du temps (transport, fonctionnement...) est plus ou moins important suivant la qualité du remplissage initial des particules mais reste généralement faible. Il pourra être par exemple de l'ordre de 1 à 5 centimètres maximum pour un lit de hauteur initiale d'un mètre. De plus, ce tassement touche généralement toute la masse du matériau particulaire, ce qui fait que l'interface supérieure de la couche sujette à ce phénomène reste approximativement horizontale. Le dispositif retenu pour réaliser la séparation, accompagnant la descente des particules sur lesquelles elle repose, reste alors en contact avec la couche inférieure qu'elle suit dans son mouvement et bien sûr avec la couche supérieure qui est toujours en appui sur elle et facilite ce contact. Un des intérêts du système flottant est que la couche de particules supérieure exerce une pression sur l'interface de la couche inférieure limitant les possibilités de mouvement des particules. On diminue ainsi les risques d'attrition et on peut généralement utiliser des vitesses plus élevées pour les fluides en circulation. C'est souvent le rôle de la couche située tout en haut de l'enveloppe pour laquelle on choisit alors un matériau de densité élevé (céramique, métal...).

Il convient de noter que lorsqu'on parle du tassement de la couche inférieure, on entend en pratique le tassement des éventuelles diverses couches inférieures. En effet, à partir du moment où les différentes couches sont en appui les unes sur les autres, le tassement de la première couche se répercute sur toutes les couches supérieures.

De préférence, la partie supérieure de la couronne possède une élasticité lui permettant de s'allonger pour compenser un tassement de la couche inférieure de particules allant jusqu'à 25mm. Cette élasticité sera intrinsèque ou obtenue par mise en forme.

Selon le cas, le dispositif selon l'invention peut présenter une ou plusieurs des caractéristiques suivantes :
- le recouvrement du disque et de la couronne sera au minimum de 25 mm ;
- la couronne de toile comprend des fils métalliques ou polymères de diamètre inférieur ou égal à 200 microns.
- le disque d'étanchéité comprend des fils métalliques ou polymères de diamètre supérieur ou égal à 200 microns.

Le principe de l'invention consiste en ce que l'étanchéité à la périphérie soit faite indépendamment de l'étanchéité principale qui elle, est réalisée de façon classique par un disque d'étanchéité constitué de toile ou de grillage. L'étanchéité à la périphérie est donc faite par le seul recouvrement entre la couronne de toile fixée à la paroi de la virole et le disque d'étanchéité sans qu'il n'y ait aucun système pour lier l'une à l'autre. C'est le seul poids de la couche supérieure de particules qui assure et maintient le contact entre les deux surfaces. S'il est placé par-dessus, le disque d'étanchéité peut également favoriser ce contact de par son propre poids.

Le recouvrement doit être bien sûr suffisant pour éviter la migration de particules entre la couronne et le disque d'étanchéité, non seulement lors du remplissage mais également lors du fonctionnement de l'unité. Il y a donc lieu de prendre en compte le tassement de la (ou des) couche inférieure.

Concernant le tassement, il convient d'avoir en tête que les procédés de production ou de séparation de gaz auxquels on destine préférentiellement ce système de séparation nécessitent d'avoir des densités de remplissage maximales pour être performant et utilisent pour leur chargement en matériaux particulaires (catalyseurs, adsorbants...) des procédés et dispositifs adéquats permettant un remplissage en pluie qui permet d'obtenir ce résultat. Le tassement résiduel qui peut se produire est alors faible, de l'ordre par exemple de 0.5 à 2%. Ainsi une couche de 2 m d'épaisseur ne se tassera que de 10 à 40 mm généralement. Il conviendra de rajouter cette longueur au recouvrement minimal que l'on souhaite. On notera que les mouvements du dispositif selon l'invention seront généralement très lents si l'unité a été remplie correctement et opérée selon les règles de l'Art, néanmoins il convient de choisir pour la couronne de toile et le disque d'étanchéité des matériaux dont l'aspect de surface permet un tel glissement. C'est généralement le cas en utilisant des toiles et grilles standards. On comprend aussi que le matériau de la toile d'étanchéité doit être suffisamment souple pour pouvoir se plier et continuer de se plaquer à la paroi de la virole lors du tassement.

En rajoutant au tassement, un recouvrement minimal résiduel de 25 mm ou de 20 fois le diamètre des plus petites particules, on obtient une première approche du dimensionnement de la largeur de la partie inférieure de la couronne de toile. Pour un lit de 2 mètres de hauteur constitué de billes d'adsorbant de 2mm de diamètre, on obtient ainsi une largeur utile minimale pour la partie inférieure de la couronne de toile, qui est destinée à être posée sur la couche inférieure de particules ou le disque d'étanchéité de 80mm et plus probablement, du fait de la qualité habituelle des remplissages, de l'ordre de 50 à 60mm. On conçoit que le recouvrement nécessaire sera d'autant plus faible que la couche inférieure sera bien tassée et de petite épaisseur. On prévoira alors un recouvrement de 25 à 40 mm par exemple. En dessous de 25 mm, l'étanchéité devient hasardeuse dans la majorité des cas.

Le dispositif selon l'invention peut éventuellement présenter la caractéristique suivante :
La partie supérieure de la couronne, c'est-à-dire celle fixée à l'enveloppe cylindrique, a la propriété de pouvoir s'allonger pour suivre au moins partiellement le mouvement du disque d'étanchéité en cas de tassement de la (ou des) couche inférieure.

Cette élasticité du matériau peut être intrinsèque (toile de polymère par exemple) ou créée par des déformations locales appliquées au moins localement à ladite toile (toile métallique présentant de petits plis par exemple). Dans les deux cas, cette élasticité permettra à la couronne, sous l'effet du poids de la couche supérieure de particules, de s'allonger de quelques millimètres, voire de quelques centimètres, pour compenser au moins partiellement le tassement. La partie inférieure (horizontale) de la couronne peut alors rester quasiment immobile par rapport au disque d'étanchéité ou, du moins, limiter son mouvement relatif vis-à-vis du disque.

Le matériau et le diamètre constitutif de la couronne de toile et du disque d'étanchéité, ainsi que les dimensions des ouvertures déterminent leurtenue mécanique et leur rigidité (ou souplesse). On utilise préférentiellement des fils en acier inoxydable pour cette application. Des fils de diamètre égal ou inférieur à 200 microns, préférentiellement de l'ordre de 100 microns garantissent une souplesse suffisante à la bande servant à l'étanchéité périphérique. Des fils de diamètre supérieur ou égal à 200 microns, préférentiellement supérieur ou égal à 250 microns procurent une certaine rigidité au disque d'étanchéité. Il n'y a cependant généralement pas lieu d'utiliser des fils de diamètre supérieur à 1000 microns. Le choix du diamètre des fils constitutifs du disque d'étanchéité est généralement le résultat d'un compromis entre souplesse et résistance mécanique. On utilisera en pratique des fils de diamètre plus important dans le cas de grosses particules, par exemple de billes de 10 mm de diamètre.

Il est important comme on va le montrer à présent de minimiser la largeur de la partie inférieure de la couronne d'étanchéité.

On prend comme exemple pour ce faire le cas d'une virole de 2000 mm de diamètre intérieur. Comme on ne veut aucune découpe dans la toile qu'on va placer à la périphérie, celle-ci sera constituée par une bande de 6280 mm de long (au recouvrement de la bande aux extrémités près).

Si on voulait par mesure de sécurité utiliser par exemple une couronne présentant une partie inférieure de 500 mm de largeur, le diamètre intérieur (c'est-à-dire le diamètre du cercle laissé libre au centre de la couronne) serait alors de 1000mm et la circonférence correspondante serait seulement 3140 mm. En pratique, cela signifie que la bande est localement deux fois trop longue. Elle va donc se placer comme elle peut sur la couche inférieure de billes en faisant des plis de dimensions et d'orientations aléatoires. De simples essais montrent qu'il alors peut alors se former des cheminements offrant des passages suffisants aux particules. Si par contre, on adopte une épaisseur de 60 mm pour la partie inférieure de la couronne, la circonférence interne sera alors égale à environ 5900 mm. On passe ainsi d'un surplus de longueur de plus de 3m à moins de 0.4 m ou plus précisément en pourcentage de la longueur de la bande de 50% à 6%. On n'a plus alors le risque d'avoir de grands plis qui se chevauchent et forment autant de cheminements potentiels pour les particules.

On remarquera que le système selon l'invention est particulièrement bien adapté aux enveloppe de large diamètre. La mise en place de la couronne d'étanchéité en est d'autant plus facilitée. Cela peut permettre également d'utiliser des largeurs de recouvrement plus importantes sans création de plis susceptibles de créer des couloirs de cheminement pour les particules.

On notera également qu'il est possible dans certains cas, moyennant une mise en forme préalable de limiter, voire de supprimer, le surplus de longueur mentionné ci-dessus. Certaines toiles métalliques, par exemple formées initialement par des entrelacements en carré, peuvent être étirées localement pour former des losanges. La partie ainsi étirée voit sa géométrie modifiée, la largeur pouvant être augmentée et la longueur simultanément réduite. Un tel procédé est utilisé pour donner des formes variées à des toiles métalliques. Appliqué ici, il permettrait de donner à la toile les dimensions géométriques d'une couronne parfaite.

La présente invention a également pour objet une unité comprenant :
- une enveloppe cylindrique,
- une couche inférieure et une couche supérieure de particules superposées dans ladite enveloppe,
- un dispositif tel que défini dans l'invention intercalé entre la couche inférieure et la couche supérieure de particules.

Selon le cas l'unité selon l'invention peut présenter une ou plusieurs des caractéristiques ci-dessous :
- ledit dispositif recouvre la totalité de la section de l'enveloppe cylindrique.
- l'enveloppe cylindrique comprend une entrée, une sortie, des moyens de tuyauteries d'entrée de fluides raccordés à l'entrée ; et des moyens de tuyauteries de sortie de fluides raccordés à la sortie.
- les particules sont choisies parmi les particules adsorbantes, les particules catalytiques et les particules inertes servant de support, de distribution des fluides ou de remplissage des volumes morts.
- ladite unité est un réacteur catalytique ou un adsorbeur.

De préférence la partie supérieure de la couronne de toile sera plaquée contre la paroi interne de l'enveloppe cylindrique.

La présente invention a également pour objet un procédé de fabrication d'un dispositif selon l'invention, comprenant les étapes suivantes :
a) préparation d'une bande de toile présentant des mailles de diamètre équivalent inférieur au diamètre équivalent des particules et une longueur égale au périmètre interne de la base de l'enveloppe cylindrique,
b) formation d'une couronne de toile au moyen de la bande de toile en rejoignant les deux largeurs de la bande de toile,
c) définir la partie supérieure et la partie inférieure de la couronne de toile,
d) préparation d'un disque d'étanchéité constitué de toile ou de grillage présentant un diamètre sensiblement égal au diamètre interne de l'enveloppe cylindrique, et des mailles de diamètre équivalent inférieur au diamètre équivalent des particules,
e) superposition de la partie inférieure de la toile et du disque d'étanchéité,
   avec les étape a) et c) étant telles qu'après l'étape e) on observe un recouvrement du disque et de la couronne de toile inférieur à 150 millimètres, de préférence inférieur à 100 millimètres.

La bande de toile choisie à l'étape a) sera de préférence essentiellement rectangulaire. Par essentiellement, on veut signifier ici approximativement, à savoir par exemple en ce qui concerne la forme de la bande de toile que celle-ci n'a pas à être absolument rectangulaire au sens géométrique strict mais qu'elle peut présenter de petits écarts de quelques pourcents sur cette géométrie idéale que ce soit sur les dimensions ou les angles. Concernant la longueur, selon le mode de fixation de la toile à la virole, il peut être opportun de laisser un recouvrement de quelques centimètres aux extrémités.

Enfin, la présente invention a également pour objet un procédé de fabrication d'une unité selon l'invention, comprenant les étapes suivantes :
a) fabrication du dispositif tel que défini dans l'invention, composé d'une couronne de toile et d'un disque d'étanchéité,
b) fixation de l'extrémité supérieure de la partie supérieure de la couronne de toile obtenue à l'étape a) sur toute sa longueur à la paroi interne de l'enveloppe cylindrique,
c) élévation de la partie inférieure de la couronne de toile obtenue à l'étape a) et maintien de ladite partie inférieure plaquée sur la paroi interne de l'enveloppe cylindrique,
d) introduction de particules dans l'enveloppe cylindrique de manière à former une couche inférieure de particules en dessous de la couronne de toile obtenue à l'étape a),
e) suppression du plaquage de la partie inférieure de la couronne de toile obtenue à l'étape
a) sur la paroi interne de l'enveloppe cylindrique de manière à ce que la partie inférieure se pose sur la couche inférieure des particules,
f) positionnement du disque d'étanchéité obtenu à l'étape a) sur la partie inférieure de la couronne de toile et
g) introduction de particules dans l'enveloppe cylindrique de manière à former une couche supérieure de particules au-dessus du disque d'étanchéité.

Selon une deuxième alternative, le procédé de fabrication de l'unité selon l'invention comprend les étapes suivantes :
a) fabrication du dispositif tel que défini dans l'invention, composé d'une couronne de toile et d'un disque d'étanchéité,
b) fixation de l'extrémité supérieure de la partie supérieure de la couronne de toile obtenue à l'étape a) sur toute sa longueur à la paroi interne de l'enveloppe cylindrique,
c) élévation de la partie inférieure de la couronne de toile obtenue à l'étape a) et maintien de ladite partie inférieure plaquée sur la paroi interne de l'enveloppe cylindrique,
d) introduction de particules dans l'enveloppe cylindrique de manière à former une couche inférieure de particules en dessous de la couronne de toile obtenue à l'étape a),
e) positionnement du disque d'étanchéité obtenu à l'étape a) sur la couche inférieure de particules,
f) suppression du plaquage de la partie inférieure de la couronne de toile obtenue à l'étape a) sur la paroi interne de l'enveloppe cylindrique de manière à ce que la partie inférieure se pose sur le disque d'étanchéité, et
g) introduction de particules dans l'enveloppe cylindrique de manière à former une couche supérieure de particules au-dessus de la partie inférieure de la couronne de toile posée sur le disque d'étanchéité.

Selon le cas, le procédé de fabrication de l'unité selon l'une ou l'autre de ces alternatives peut présenter une ou plusieurs des caractéristiques suivantes :
- à l'étape c) le maintien de ladite partie inférieure plaquée sur la paroi interne de l'enveloppe cylindrique est réalisé au moyen de fixations temporaires choisies de préférence parmi les aimants et les adhésifs.
- à l'étape b) la fixation de l'extrémité supérieure de la partie supérieure de la couronne de toile obtenue à l'étape a) sur toute sa longueur à la paroi interne de l'enveloppe cylindrique est réalisée à l'aide de plats de maintien cintrés ;
- les plats de maintien cintrés sont soudés, vissés via des gougeons fixés à la virole et/ou collés à l'enveloppe cylindrique. Si nécessaire, une étanchéité complémentaire peut être faite au moyen d'un joint.

Notons que les « plats de maintien » peuvent aussi être appelés « fers plats ». Ils seront de préférence organisés en secteurs.

Le dispositif selon l'invention est préférentiellement en acier inoxydable mais peut être en d'autres matériaux métalliques (acier carbone, aluminium...) et/ou polymères, la fixation définitive de la partie supérieure de la couronne de toile à l'enveloppe cylindrique sera préférentiellement effectuée par soudure, vissage et/ou collage et les fixations temporaires de la partie inférieure de la couronne de toile à l'enveloppe cylindrique seront faites préférentiellement en utilisant des aimants, des bandes ou dispositifs adhésifs.

Préférentiellement, on utilisera des plats de maintien préalablement fixés de part et d'autres du bord de la couronne de toile pour la souder à l'enveloppe cylindrique à laquelle aura été également soudé précédemment à la hauteur adéquate un renfort.

Cette nécessité d'intervenir à l'intérieur de l'enveloppe cylindrique pour effectuer des fixations va également dans le sens de réserver ce dispositif préférentiellement aux enveloppes de diamètre suffisamment important. Une valeur minimale de 750mm parait un choix judicieux.

En relevant la partie inférieure de la couronne de toile et en la plaquant à la paroi par un dispositif temporaire, la section de l'enveloppe cylindrique est essentiellement libre et va permettre d'effectuer un remplissage très efficace, les particules, tombant en pluie grâce à un procédé de remplissage adéquat, ne rencontrant pas d'obstacle dans leur chute.

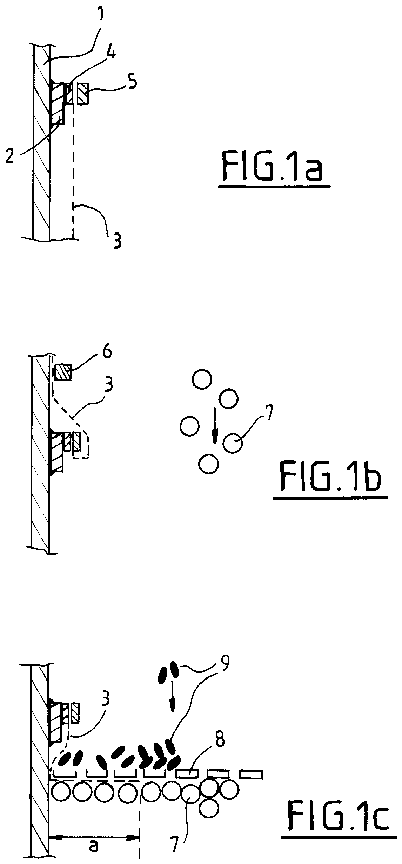

La figure 1 illustre le premier procédé de fabrication de l'unité selon l'invention.

Le schéma 1.a correspond à la fixation de la partie supérieure de la couronne de toile dans l'enveloppe cylindrique. Le schéma 1. b illustre la position de la partie inférieure de la couronne de toile pendant le remplissage et le schéma 1.c illustre la position de la toile après remplissage. Il s'agit de vues en coupe de l'enveloppe cylindrique limitée à l'endroit de la fixation de la couronne de toile. Le repère 1 correspond à l'enveloppe cylindrique, le repère 2 au renfort soudé à l'enveloppe cylindrique le long d'une circonférence. La partie supérieure de la couronne de toile 3 est fixée à ce renfort via ses plats de maintien 4 et 5 cintrés aux dimensions de l'enveloppe. En pratique, ils seront découpés en secteurs pour faciliter les manipulations. Le schéma 1.b montre la même couronne de toile dont la partie inférieure est relevée et plaquée à la paroi par un système d'aimant 6. Dans cette position, on peut alors procéder au remplissage de l'enveloppe par les particules 7 jusqu'au niveau désiré. Le schéma 1.c correspond au remplissage de l'enveloppe par la couche supérieure de particules (9). Notons qu'entre temps le disque d'étanchéité est venu se superposé à la partie inférieure de la couronne de toile 3. Le recouvrement entre la partie inférieure de la couronne de toile 3 et le disque d'étanchéité 8 dont le diamètre est celui de l'enveloppe cylindrique est représenté par" a ". Dans le cas d'un adsorbeur utilisé sur une unité de production d'oxygène à partir d'air atmosphérique, on s'attend pour un tel système disposé entre 2 couches successives d'adsorbant à un tassement de l'ordre de 10mm et le recouvrement sera tel que a soit de l'ordre de 40 à 50mm. Cela suffit pour éviter tout interpénétration des particules à la paroi.

L'invention concerne plus particulièrement les procédés de production ou d'épuration de gaz mettant en œuvre des enveloppes cylindriques, ces enveloppes étant essentiellement des réacteurs catalytiques ou des adsorbeurs.

Par adsorbeurs, on entend des dispositifs mettant en œuvre des procédés d'adsorption. On distingue les adsorbeurs TSA des adsorbeurs PSA.

Les cycles d'adsorption diffèrent en premier lieu par la façon dont l'adsorbant est régénéré. Si la régénération se fait essentiellement par augmentation de la température, il s'agit d'un procédé TSA (Température Swing Adsorption = adsorption avec variation de température). Si par contre, la régénération s'effectue par baisse de la pression, il s'agit d'un procédé PSA (Pressure Swing Adsorption = adsorption à pression modulée); De façon générale, on désigne par les termes PSA tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle): - Les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs ; - Les procédés MPSA ou VPSA dans lesquels l'adsorption s'effectue à une pression haute supérieure à la pression atmosphérique, typiquement entre 1.35 et 6 bar abs, et la désorption à une pression basse inférieure à la pression atmosphérique, généralement comprise entre 200 et 650 mbar abs ; - Les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs ; - Les procédés RPSA (Rapid PSA) pour lesquels la durée du cycle de pression est typiquement inférieure à la minute - Les procédés URPSA (Ultra Rapid PSA) pour lesquels la durée du cycle de pression est de l'ordre de quelques secondes maximum. Il convient de noter que ces diverses appellations ne sont pas standardisées et qu'en particulier les limites indiquées sont sujettes à variation selon les auteurs.) La grande majorité des procédés par adsorption mettent en jeu plusieurs lits de particules, que ce soient des particules inertes (support...) ou des adsorbants, et il y a généralement lieu de séparer par un système adéquat au moins deux couches successives.

Plus particulièrement, on appliquera l'invention au procédé de production d'oxygène à partir d'air atmosphérique par adsorption à modulation de pression comportant une pluralité N d'adsorbeurs (N> ou = 1) cylindriques à axe vertical mettant en œuvre dans chacun de ses adsorbeurs au moins un dispositif selon l'invention, ce dispositif se trouvant entre un lit de support inerte et la première couche adsorbante destinée essentiellement à arrêter l'humidité atmosphérique ( gel de silice, alumine activée, zéolite de type X..) et/ou entre deux couches successives d'adsorbants ( par exemple Alumine Activée et LiLSX...) et/ou entre la couche supérieure d'adsorbant et un matériau de remplissage du fond supérieur ( par exemple entre LILSX et billes de céramiques).

L'humidité et le CO2 contenus dans l'air atmosphérique sont des poisons pour les zéolites utilisées dans cette application et ceci d'autant plus que cette zéolite est performante pour le séparation O2/N2. Il convient de mettre en place les charges adsorbantes rapidement afin de minimiser leur contact avec l'atmosphère. Le dispositif selon l'invention répond parfaitement à cette contrainte.

De façon générale, dans ce type d'unité les adsorbeurs sont de diamètre relativement important, souvent supérieurs à 1500mm, de hauteur relativement faible, souvent inférieure à 1500mm et sont remplis de différentes couches d'adsorbants avec un dispositif permettant un remplissage dense, autant de critères qui poussent à l'utilisation d'un système selon l'invention.

On limite la portée de l'invention aux enveloppes cylindriques qui constituent la très grande majorité des enveloppes utilisées en particulier dans les procédés chimiques ou pétrochimiques. Si nécessaire, on pourrait adapter cette invention à d'autres géométries, en conservant le fait que l'étanchéité à la périphérie soit faite indépendamment de l'étanchéité principale -qui concerne quant à elle l'essentiel de la section de l'enveloppe- et qu'il n'y ait pas de système pour lier l'une à l'autre.

## Revendications

1. Dispositif susceptible d'être utilisé dans des procédés industriels
destiné à être intercalé entre une couche inférieure et une couche supérieure de particules disposées dans une enveloppe cylindrique, de manière à limiter ou supprimer la migration des particules entre les couches, ledit dispositif comprenant :
i) un disque d'étanchéité constitué de toile ou de grillage présentant :
- un diamètre sensiblement égal au diamètre interne de l'enveloppe cylindrique, et
- des mailles de diamètre équivalent inférieur au diamètre équivalent des particules, et
ii) une couronne de toile présentant :
- des mailles de diamètre équivalent inférieur au diamètre équivalent des particules,
- une longueur égale au périmètre interne de la base de l'enveloppe cylindrique,
- une partie supérieure présentant une extrémité supérieure destinée à être fixée sur toute sa longueur à la paroi interne de l'enveloppe cylindrique, et
- un partie inférieure destinée à être posée sur la couche inférieure de particules ou sur le disque d'étanchéité,
avec le disque d'étanchéité et la partie inférieure de la couronne de toile étant superposés et le recouvrement du disque et de la couronne de toile étant inférieure à 150 millimètres.

2. Dispositif selon la revendication 1, caractérisé en ce le recouvrement du disque et de la couronne sera au minimum de 25 mm.

3. Dispositif selon l'une des revendications 1 ou 2, **caractérisé en ce que** la couronne de toile comprend des fils métalliques ou polymères de diamètre inférieur ou égal à 200 microns.

4. Dispositif selon l'une des revendications 1 à 3, **caractérisé en ce que** le disque d'étanchéité comprend des fils métalliques ou polymères de diamètre supérieur ou égal à 200 microns.

5. Unité comprenant :
- une enveloppe cylindrique,
- une couche inférieure et une couche supérieure de particules superposées dans ladite enveloppe,
- un dispositif tel que défini dans l'une des revendications 1 à 4 intercalé entre la couche inférieure et la couche supérieure de particules.

6. Unité selon la revendication 5, **caractérisée en ce que** ledit dispositif défini dans l'une des revendications 1 à 4 recouvre la totalité de la section de l'enveloppe cylindrique.

7. Unité selon l'une des revendications 5 ou 6, **caractérisée en ce que** l'enveloppe cylindrique comprend :
- une entrée,
- une sortie,
- des moyens de tuyauteries d'entrée de fluides raccordés à l'entrée ; et
- des moyens de tuyauteries de sortie de fluides raccordés à la sortie.

8. Unité selon l'une des revendications 5 à 7, **caractérisée en ce que** les particules sont choisies parmi les particules adsorbantes, les particules catalytiques et les particules inertes servant de support, de distribution des fluides ou de remplissage des volumes morts.

9. Unité selon l'une des revendications 5 à 8, **caractérisée en ce qu'**elle est un réacteur catalytique ou un adsorbeur.

10. Procédé de fabrication d'un dispositif selon l'une des revendications 1 à 4 comprenant les étapes suivantes :
a) préparation d'une bande de toile présentant des mailles de diamètre équivalent inférieur au diamètre équivalent des particules et une longueur égale au périmètre interne de la base de l'enveloppe cylindrique,
b) formation d'une couronne de toile au moyen de la bande de toile en rejoignant les deux largeurs de la bande de toile,
c) définir la partie supérieure et la partie inférieure de la couronne de toile,
d) préparation d'un disque d'étanchéité constitué de toile ou de grillage présentant un diamètre sensiblement égal au diamètre interne de l'enveloppe cylindrique, et des mailles de diamètre équivalent inférieur au diamètre équivalent des particules,
e) superposition de la partie inférieure de la toile et du disque d'étanchéité,
avec les étape a) et c) étant telles qu'après l'étape e) on observe un recouvrement du disque et de la couronne de toile inférieur à 150 millimètres, de préférence inférieur à 100 millimètres.

11. Procédé de fabrication d'une unité selon l'une des revendications 5 à 9, comprenant les étapes suivantes :
a) fabrication du dispositif tel que défini dans l'une des revendications 1 à 4, composé d'une couronne de toile et d'un disque d'étanchéité,
b) fixation de l'extrémité supérieure de la partie supérieure de la couronne de toile obtenue à l'étape a) sur toute sa longueur à la paroi interne de l'enveloppe cylindrique,
c) élévation de la partie inférieure de la couronne de toile obtenue à l'étape a) et maintien de ladite partie inférieure plaquée sur la paroi interne de l'enveloppe cylindrique,
d) introduction de particules dans l'enveloppe cylindrique de manière à former une couche inférieure de particules en dessous de la couronne de toile obtenue à l'étape a),
e) suppression du plaquage de la partie inférieure de la couronne de toile obtenue à l'étape
a) sur la paroi interne de l'enveloppe cylindrique de manière à ce que la partie inférieure se pose sur la couche inférieure des particules,
f) positionnement du disque d'étanchéité obtenu à l'étape a) sur la partie inférieure de la couronne de toile et
g) introduction de particules dans l'enveloppe cylindrique de manière à former une couche supérieure de particules au-dessus du disque d'étanchéité.

12. Procédé de fabrication d'une unité selon l'une des revendications 5 à 9, comprenant les étapes suivantes :
a) fabrication du dispositif tel que défini dans l'une des revendications 1 à 4, composé d'une couronne de toile et d'un disque d'étanchéité,
b) fixation de l'extrémité supérieure de la partie supérieure de la couronne de toile obtenue à l'étape a) sur toute sa longueur à la paroi interne de l'enveloppe cylindrique,
c) élévation de la partie inférieure de la couronne de toile obtenue à l'étape a) et maintien de ladite partie inférieure plaquée sur la paroi interne de l'enveloppe cylindrique,
d) introduction de particules dans l'enveloppe cylindrique de manière à former une couche inférieure de particules en dessous de la couronne de toile obtenue à l'étape a),
e) positionnement du disque d'étanchéité obtenu à l'étape a) sur la couche inférieure de particules,
f) suppression du plaquage de la partie inférieure de la couronne de toile obtenue à l'étape a) sur la paroi interne de l'enveloppe cylindrique de manière à ce que la partie inférieure se pose sur le disque d'étanchéité, et
g) introduction de particules dans l'enveloppe cylindrique de manière à former une couche supérieure de particules au-dessus de la partie inférieure de la couronne de toile posée sur le disque d'étanchéité.

13. Procédé selon l'une des revendications 11 ou 12, **caractérisé en ce qu'**à l'étape c) le maintien de ladite partie inférieure plaquée sur la paroi interne de l'enveloppe cylindrique est réalisé au moyen de fixations temporaires choisies de préférence parmi les aimants et les adhésifs.

14. Procédé selon l'une des revendications 11 ou 12, **caractérisé en ce qu'**à l'étape b) la fixation de l'extrémité supérieure de la partie supérieure de la couronne de toile obtenue à l'étape a) sur toute sa longueur à la paroi interne de l'enveloppe cylindrique est réalisée à l'aide de plats de maintien cintrés.

15. Procédé selon la revendication 14, **caractérisé en ce que** les plats de maintien cintrés sont soudés, vissés et/ou collés à l'enveloppe cylindrique.

## Patentansprüche

1. Vorrichtung, die in industriellen Verfahren verwendbar ist und dazu bestimmt ist, zwischen eine untere Lage und eine obere Lage von Partikeln gesetzt zu werden, die in einem zylindrischen Mantel angeordnet sind, so dass die Migration der Partikel zwischen den Lagen begrenzt oder aufgehoben wird, wobei die Vorrichtung umfasst:
i) eine Dichtungsscheibe, die aus Tuch oder Geflecht besteht, aufweisend:
- einen Durchmesser, der im Wesentlichen gleich dem Innendurchmesser des zylindrischen Mantels ist, und
- Maschen mit einem äquivalenten Durchmesser, der kleiner als der äquivalente Durchmesser der Partikel ist, und ii) einen Kranz aus Tuch, aufweisend:
- Maschen mit einem äquivalenten Durchmesser, der kleiner als der äquivalente Durchmesser der Partikel ist,
- eine Länge, die gleich dem Innenumfang der Basis des zylindrischen Mantels ist,
- einen oberen Teil, der ein oberes Ende aufweist, das dazu bestimmt ist, über seine gesamte Länge an der Innenwand des zylindrischen Mantels befestigt zu werden, und
- einen unteren Teil, der dazu bestimmt ist, auf die untere Lage von Partikeln oder auf die Dichtungsscheibe gelegt zu werden,
wobei die Dichtungsscheibe und der untere Teil des Kranzes aus Tuch übereinanderliegen und die Überdeckung der Scheibe und des Kranzes aus Tuch weniger als 150 Millimeter beträgt.

2. Vorrichtung nach Anspruch 1, **dadurch gekennzeichnet, dass** die Überdeckung der Scheibe und des Kranzes mindestens 25 mm beträgt.

3. Vorrichtung nach einem der Ansprüche 1 oder 2 **dadurch gekennzeichnet, dass** der Kranz aus Tuch Metall- oder Polymerfäden mit einem Durchmesser kleiner oder gleich 200 Mikrometer umfasst.

4. Vorrichtung nach einem der Ansprüche 1 bis 3, **dadurch gekennzeichnet, dass** die Dichtungsscheibe Metall- oder Polymerfäden mit einem Durchmesser größer oder gleich 200 Mikrometer umfasst.

5. Einheit, umfassend:
- einen zylindrischen Mantel,
- eine untere Lage und eine obere Lage von Partikeln, die in dem Mantel übereinanderliegen,
- eine Vorrichtung wie in einem der Ansprüche 1 bis 4 definiert, die zwischen die untere Lage und die obere Lage von Partikeln gesetzt ist.

6. Einheit nach Anspruch 5, **dadurch gekennzeichnet, dass** die in einem der Ansprüche 1 bis 4 definierte Vorrichtung die Gesamtheit des Querschnitts des zylindrischen Mantels überdeckt.

7. Einheit nach einem der Ansprüche 5 oder 6, **dadurch gekennzeichnet, dass** der zylindrische Mantel umfasst:
- einen Einlass,
- einen Auslass,
- Fluideinlass-Leitungseinrichtungen, die an den Einlass angeschlossen sind; und
- Fluidauslass-Leitungseinrichtungen, die an den Auslass angeschlossen sind.

8. Einheit nach einem der Ansprüche 5 bis 7, **dadurch gekennzeichnet, dass** die Partikel unter adsorbierenden Partikeln, katalytischen Partikeln und inerten Partikeln gewählt sind, die zum Stützen, zum Verteilen der Fluide oder zum Füllen von Totvolumina dienen.

9. Einheit nach einem der Ansprüche 5 bis 8, **dadurch gekennzeichnet, dass** sie ein katalytischer Reaktor oder ein Adsorber ist.

10. Verfahren zur Herstellung einer Vorrichtung nach einem der Ansprüche 1 bis 4, umfassend die folgenden Schritte:
a) Vorbereiten eines Tuchstreifens, der Maschen mit einem äquivalenten Durchmesser, der kleiner als der äquivalente Durchmesser der Partikel ist, und eine Länge, die gleich dem Innenumfang der Basis des zylindrischen Mantels ist, aufweist,
b) Bilden eines Kranzes aus Tuch mittels des Tuchstreifens, indem die beiden Breiten des Tuchstreifens aneinandergefügt werden,
c) Definieren des oberen Teils und des unteren Teils des Kranzes aus Tuch,
d) Vorbereiten einer Dichtungsscheibe, die aus Tuch oder Geflecht besteht und einen Durchmesser, der im Wesentlichen gleich dem Innendurchmesser des zylindrischen Mantels ist, und Maschen mit einem äquivalenten Durchmesser, der kleiner als der äquivalente Durchmesser der Partikel ist, aufweist,
e) Übereinanderlegen des unteren Teils des Tuchs und der Dichtungsscheibe,
wobei die Schritte a) und c) derart sind, dass nach dem Schritt e) eine Überdeckung der Scheibe und des Kranzes aus Tuch von weniger als 150 Millimeter, bevorzugt weniger als 100 Millimeter, beobachtet wird.

11. Verfahren zur Herstellung einer Einheit nach einem der Ansprüche 5 bis 9, umfassend die folgenden Schritte:
a) Herstellen der Vorrichtung wie in einem der Ansprüche 1 bis 4 definiert, die aus einem Kranz aus Tuch und aus einer Dichtungsscheibe besteht,
b) Befestigen des oberen Endes des oberen Teils des Kranzes aus Tuch, der in Schritt a) erhalten wird, über seine gesamte Länge an der Innenwand des zylindrischen Mantels,
c) Anheben des unteren Teils des Kranzes aus Tuch, der in Schritt a) erhalten wird, und Angepressthalten des unteren Teils an die Innenwand des zylindrischen Mantels,
d) Einführen von Partikeln in den zylindrischen Mantel, so dass eine untere Lage von Partikeln unter dem in Schritt a) erhaltenen Kranz aus Tuch gebildet wird,
e) Aufheben des Anpressens des unteren Teils des Kranzes aus Tuch, der in Schritt a) erhalten wird, an die Innenwand des zylindrischen Mantels, so dass sich der untere Teil auf die untere Lage der Partikel legt,
f) Positionieren der Dichtungsscheibe, die in Schritt a) erhalten wird, auf dem unteren Teil des Kranzes aus Tuch und
g) Einführen von Partikeln in den zylindrischen Mantel, so dass eine obere Lage von Partikeln über der Dichtungsscheibe gebildet wird.

12. Verfahren zur Herstellung einer Einheit nach einem der Ansprüche 5 bis 9, umfassend die folgenden Schritte:
a) Herstellen der Vorrichtung wie in einem der Ansprüche 1 bis 4 definiert, die aus einem Kranz aus Tuch und aus einer Dichtungsscheibe besteht,
b) Befestigen des oberen Endes des oberen Teils des Kranzes aus Tuch, der in Schritt a) erhalten wird, über seine gesamte Länge an der Innenwand des zylindrischen Mantels,
c) Anheben des unteren Teils des Kranzes aus Tuch, der in Schritt a) erhalten wird, und Angepressthalten des unteren Teils an die Innenwand des zylindrischen Mantels,
d) Einführen von Partikeln in den zylindrischen Mantel, so dass eine untere Lage von Partikeln unter dem in Schritt a) erhaltenen Kranz aus Tuch gebildet wird,
e) Positionieren der Dichtungsscheibe, die in Schritt a) erhalten wird, auf der unteren Lage von Partikeln,
f) Aufheben des Anpressens des unteren Teils des Kranzes aus Tuch, der in Schritt a) erhalten wird, an die Innenwand des zylindrischen Mantels, so dass sich der untere Teil auf die Dichtungsscheibe legt, und
g) Einführen von Partikeln in den zylindrischen Mantel, so dass eine obere Lage von Partikeln über dem unteren Teil des Kranzes aus Tuch gebildet wird, der auf der Dichtungsscheibe liegt.

13. Verfahren nach einem der Ansprüche 11 oder 12, **dadurch gekennzeichnet, dass** im Schritt c) das Angepressthalten des unteren Teils an die Innenwand des zylindrischen Mantels mittels von temporären Befestigungen ausgeführt wird, die bevorzugt unter Magneten und Klebebändern gewählt sind.

14. Verfahren nach einem der Ansprüche 11 oder 12, **dadurch gekennzeichnet, dass** im Schritt b) das Befestigen des oberen Endes des Kranzes aus Tuch, der in Schritt a) erhalten wird, über seine gesamte Länge an der Innenwand des zylindrischen Mantels mithilfe von gebogenen Halteflachstücken ausgeführt wird.

15. Verfahren nach Anspruch 14, **dadurch gekennzeichnet, dass** die gebogenen Halteflachstücke an den zylindrischen Mantel, geschweißt, geschraubt und/oder geklebt sind.

## Claims

1. Device which can be used in industrial processes, intended to be interposed between a lower layer and an upper layer of particles arranged inside a cylindrical shell, so as to limit or prevent the migration of particles between the layers, said device comprising:
i) a sealing disk made of fabric or of mesh, having:
- a diameter substantially equal to the internal diameter of the cylindrical shell, and
- meshes of equivalent diameter smaller than the equivalent diameter of the particles,
and
ii) a ring of fabric having:
- meshes of equivalent diameter smaller than the equivalent diameter of the particles,
- a length equal to the internal perimeter of the base of the cylindrical shell,
- an upper part having an upper end intended to be attached along its entire length to the internal wall of the cylindrical shell, and
- a lower part intended to be laid on the lower layer of particles or on the sealing disk,
with the sealing disk and the lower part of the ring of fabric being superimposed and the overlap between the disk and the ring of fabric being less than 150 millimeters.

2. Device according to Claim 1, **characterized in that** the overlap between the disk and the ring will be at least 25 mm.

3. Device according to one of Claims 1 and 2, **characterized in that** the ring of fabric comprises metal or polymer filaments with a diameter less than or equal to 200 microns.

4. Device according to one of Claims 1 to 3, **characterized in that** the sealing disk comprises metal or polymer filaments with a diameter greater than or equal to 200 microns.

5. Unit comprising:
- a cylindrical shell,
- a lower layer and an upper layer of particles, which layers are superposed in said shell,
- a device as defined in one of Claims 1 to 4 interposed between the lower layer and the upper layer of particles.

6. Unit according to Claim 5, **characterized in that** said device defined in one of Claims 1 to 4 covers the entirety of the cross section of the cylindrical shell.

7. Unit according to one of Claims 5 and 6, **characterized in that** the cylindrical shell comprises:
- an inlet,
- an outlet,
- fluid inlet pipework means coupled to the inlet, and
- fluid outlet pipework means coupled to the outlet.

8. Unit according to one of Claims 5 to 7, **characterized in that** the particles are selected from adsorbent particles, catalytic particles and inert particles acting as a support, serving to distribute the fluids, or serving to fill dead volumes.

9. Unit according to one of Claims 5 to 8, **characterized in that** it is a catalytic reactor or an adsorber.

10. Method for manufacturing a device according to one of Claims 1 to 4, comprising the following steps:
a) preparing a strip of fabric having meshes of an equivalent diameter smaller than the equivalent diameter of the particles and a length equal to the internal perimeter of the base of the cylindrical shell,
b) forming a ring of fabric from the strip of fabric by joining together the two widths of the strip of fabric,
c) defining the upper part and the lower part of the ring of fabric,
d) preparing a sealing disk made of fabric or of mesh having a diameter substantially equal to the internal diameter of the cylindrical shell, and meshes of an equivalent diameter smaller than the equivalent diameter of the particles,
e) superposing the lower part of the fabric and the sealing disk,
with steps a) and c) being such that, after step e) the observed overlap between the disk and the ring of fabric is less than 150 millimeters, preferably less than 100 millimeters.

11. Method for manufacturing a unit according to one of Claims 5 to 9, comprising the following steps:
a) manufacturing the device as defined in one of Claims 1 to 4, made up of a ring of fabric and of a sealing disk,
b) attaching the upper end of the upper part of the ring of fabric obtained in step a) along its entire length to the internal wall of the cylindrical shell,
c) raising the lower part of the ring of fabric obtained in step a) and keeping said lower part applied firmly against the internal wall of the cylindrical shell,
d) introducing particles into the cylindrical shell in such a way as to form a lower layer of particles underneath the ring of fabric obtained in step a),
e) releasing the lower part of the ring of fabric obtained in step a) from being kept firmly applied to the internal wall of the cylindrical shell so that the lower part settles down onto the lower layer of particles,
f) positioning the sealing disk obtained in step a) on the lower part of the ring of fabric, and
g) introducing particles into the cylindrical shell in such a way as to form an upper layer of particles on top of the sealing disk.

12. Method for manufacturing a unit according to one of Claims 5 to 9, comprising the following steps:
a) manufacturing the device as defined in one of Claims 1 to 4, made up of a ring of fabric and of a sealing disk,
b) attaching the upper end of the upper part of the ring of fabric obtained in step a) along its entire length to the internal wall of the cylindrical shell,
c) raising the lower part of the ring of fabric obtained in step a) and keeping said lower part applied firmly against the internal wall of the cylindrical shell,
d) introducing particles into the cylindrical shell in such a way as to form a lower layer of particles underneath the ring of fabric obtained in step a),
e) positioning the sealing disk obtained in step a) on the lower layer of particles,
f) releasing the lower part of the ring of fabric obtained in step a) from being kept firmly applied to the internal wall of the cylindrical shell so that the lower part settles down onto the sealing disk, and
g) introducing particles into the cylindrical shell in such a way as to form an upper layer of particles on top of the lower part of the ring of fabric placed upon the sealing disk.

13. Method according to one of Claims 11 and 12, **characterized in that**, in step c), said lower part is kept firmly applied to the internal wall of the cylindrical shell by means of temporary fixings preferably chosen from magnets and adhesives.

14. Method according to one of Claims 11 and 12, **characterized in that**, in step b), the attaching of the upper end of the upper part of the ring of fabric obtained in step a) along its entire length to the internal wall of the cylindrical shell is achieved using curved retaining bars.

15. Method according to Claim 14, **characterized in that** the curved retaining bars are welded, screwed and/or bonded to the cylindrical shell.
